# EUROPEAN PATENT SPECIFICATION

(11) **EP 3 564 747 B1**
(45) Date of publication and mention of the grant of the patent: **27.10.2021**
(21) Application number: 17886079.7
(22) Date of filing: 15.12.2017
(51) Int. Cl.: H04N 17/00, H04N 5/225, G03B 17/02, H04N 5/357, H04N 5/217, G06T 5/00

(54) **IMAGING DEVICE AND IMAGING METHOD**
BILDGEBUNGSVORRICHTUNG UND BILDGEBUNGSVERFAHREN
DISPOSITIF D'IMAGERIE ET PROCÉDÉ D'IMAGERIE

(30) Priority: 27.12.2016 JP 2016253015
(43) Date of publication of application: 06.11.2019
(73) Proprietor: Hitachi Astemo, Ltd., Hitachinaka-shi, Ibaraki 312-8503 (JP)
(72) Inventor: TAKEUCHI Kenichi, Hitachinaka-shi Ibaraki 312-8503 (JP); SHINOHARA Hidenori, Hitachinaka-shi Ibaraki 312-8503 (JP)
(74) Representative: Strehl Schübel-Hopf & Partner
(86) International application number: PCT/JP2017/045030
(87) International publication number: WO 2018/123639

(56) References cited:
- EP-A1- 2 091 224
- JP-A- 2012 165 206
- JP-A- 2012 165 206
- JP-A- 2013 038 620
- JP-A- 2013 038 620
- US-A1- 2007 211 154

## Description

### Technical Field

The present invention relates to an imaging device and an imaging method.

### Background Art

In recent years, a driving support system using an image obtained by an in-vehicle camera device receives attention as a technique contributing to safe driving and automatic driving. For example, there is used a technique that a displacement (parallax) in the horizontal direction related to an object reflected on two images captured by a pair of imaging devices (stereo camera) is specified, and a distance up to the object is calculated by the principal of triangulation on the basis of the specified parallax.

In the in-vehicle camera device used in such a technique, the accuracy of the positions of the optical axis of a lens and an imaging element is influenced by the calculated distance or the accuracy of the driving support system using thereof. Therefore, the adjustment of the positions of the lens and the imaging element is significantly important. Therefore, as an example of a technique related to the position adjustment of the lens and the imaging element, PTL 1 (JP 2014-135567 A) discloses an imaging device which includes an imaging element which sets a portion inside an image circle which is a range where an incident light from the lens forms an image to a non-vignetting area, and sets a portion outside the image circle to a vignetting area to capture the inside of the capture region of a capture image, and a digital signal processing unit which irradiates a plurality of scanning lines parallel to each other in the capture region, sets a boundary point between the vignetting area in the capture region and the non-vignetting area in the capture region from the pixels on the scanning line to extract three boundary points which are not on an approximate straight line, calculates an estimated image circle which includes the three extracted boundary points on a periphery as a result of estimating the image circle, and moves the imaging element such that the capture center of the imaging element is matched to an estimated center of the estimated image circle.

### Citation List

### Patent Literature

PTL 1: JP 2014-135567 A

Further, prior art from which the pre-characterising part of claim 1 starts out is disclosed in JP 2013 038620 A. Related art is disclosed by JP 2012 165206 A.

### Summary of Invention

### Technical Problem

By the way, an in-vehicle camera device necessarily copes with use under a high/low pitch environment or a high humidity environment. In addition, the positional displacement between aging deterioration of the lens and the imaging element is necessarily suppressed. However, it is impossible to completely clear the positional displacement between the lens and the imaging element caused by a temperature/humidity change or the aging.

The present invention has been made in view of the above problem, and an object thereof is to provide an imaging device and an imaging method, wherein it is possible to accurately determine positional displacement quantity between a lens and an imaging element.

### Solution to Problem

In order to achieve the above object, the present invention provides an imaging device in accordance with claim 1 and an imaging method in accordance with claim 6.

### Advantageous Effects of Invention

According to the present invention, it is possible to accurately determine positional displacement quantity between a lens and an imaging element.

### Brief Description of Drawings

[FIG. 1] FIG. 1 is a diagram conceptually illustrating the entire configuration of an imaging device.
[FIG. 2] FIG. 2 is a diagram schematically illustrating a relative positional relation at initial positions of a lens and an imaging element of the imaging device.
[FIG. 3] FIG. 3 is a diagram illustrating a case where a relative position of the lens and the imaging element of the imaging device is displaced.
[FIG. 4] FIG. 4 is a diagram for describing an example of an optical axis position calculating process in an image processing unit, illustrating a state of a virtual circle used in the optical axis position calculating process.
[FIG. 5] FIG. 5 is a diagram for describing an example of the optical axis position calculating process in an image processing unit, illustrating a state of the optical axis position calculating process.
[FIG. 6] FIG. 6 is a diagram for describing another example of the optical axis position calculating process in the image processing unit.
[FIG. 7] FIG. 7 is a diagram for describing still another example of the optical axis position calculating process in the image processing unit.
[FIG. 8] FIG. 8 is a diagram for describing for describing the optical distortion correcting process in the image processing unit, illustrating a state of an affine table creating process used in the optical distortion correcting process.
[FIG. 9] FIG. 9 is a diagram for describing the optical distortion correcting process in the image processing unit, illustrating a state of the optical distortion correcting process.

### Description of Embodiments

Hereinafter, embodiments of the present invention will be described with reference to the drawings.

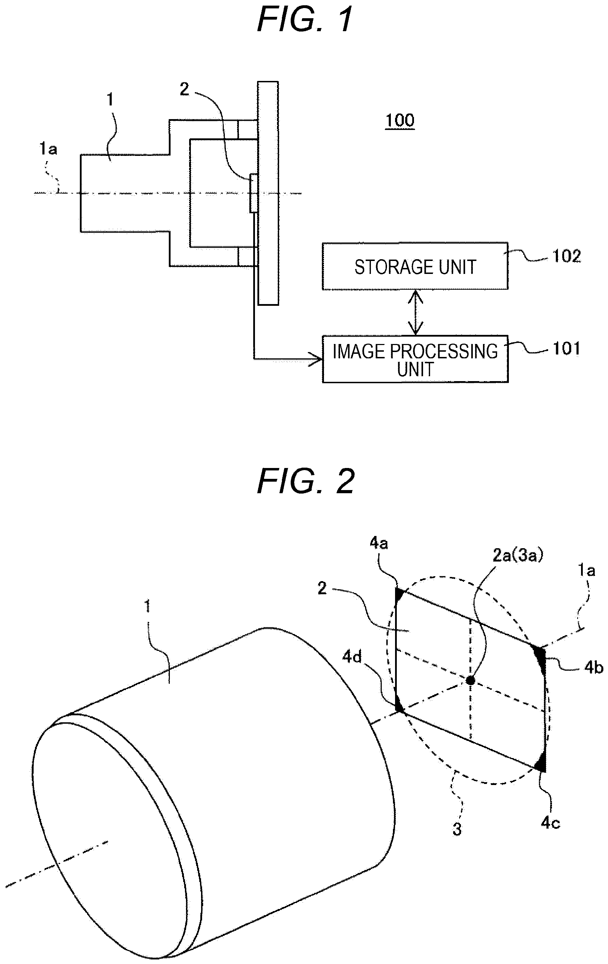

FIG. 1 is a diagram schematically illustrating the entire configuration of an imaging device according to this embodiment.

In FIG. 1, an imaging device 100 is configured by a lens 1 facing an imaging object, an imaging element 2 disposed on the other side of the lens opposite to the imaging object, an image processing unit 101 performing various types of processes related to an image captured by the imaging element 2, and a storage unit 102 which stores various types of image and a table such as an affine table as a result of the process of the image processing unit 101, various types of variables, and other information.

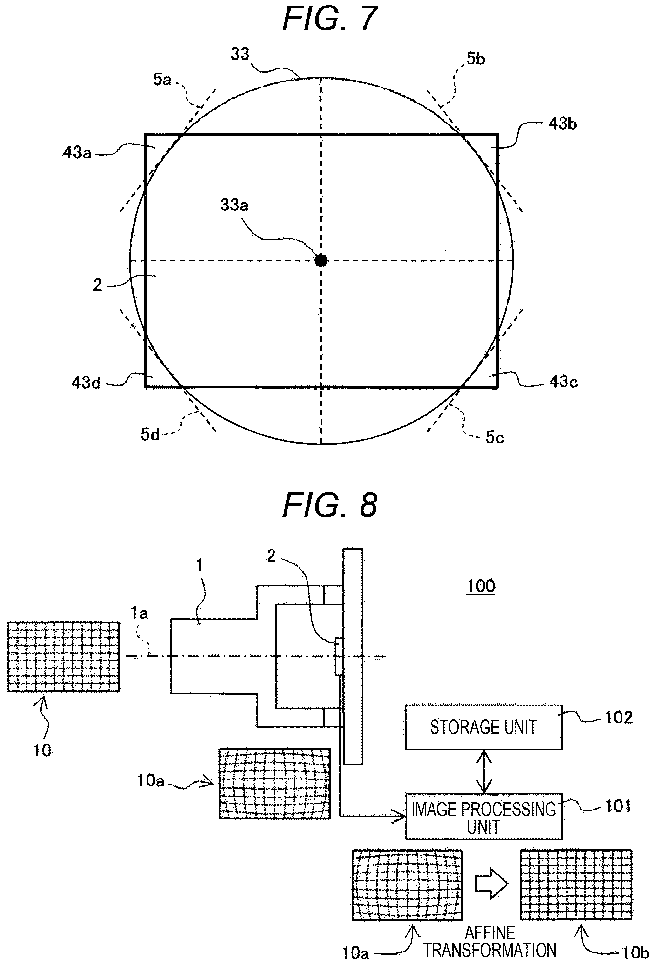

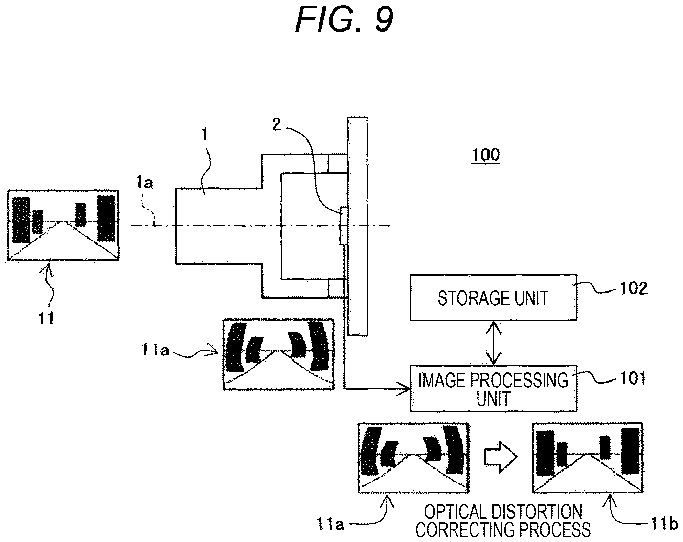

FIGS. 8 and 9 are diagrams for describing the optical distortion correcting process in the image processing unit. FIG. 8 illustrates a state of an affine table creating process used in the optical distortion correcting process. FIG. 9 illustrates a state of the optical distortion correcting process.

In FIG. 8, in the affine table creating process, first, when a lattice chart 10 created with a known gap is captured as a reference imaging object, an image 10a containing an optical distortion of the lens 1 is obtained. In the image processing unit 101, the image 10a of the lattice chart 10 containing the optical distortion is subjected to an affine transformation to obtain an image 10b in which the optical distortion is corrected so as to create the affine table. The affine table created by the image processing unit 101 is stored in the storage unit 102.

In FIG. 9, in the optical distortion correcting process, first, an imaging object 11 is captured, and an image 11a containing the optical distortion of the lens 1 is acquired. In the image processing unit 101, the affine table is read from the storage unit 102, and a correction process of the optical distortion used in the affine table is performed on the image 11a containing the optical distortion, so that an image 11b of the imaging object 11 from which the distortion is reduced can be obtained. At this time, the image 11b can be obtained with higher accuracy by applying a displacement quantity of the relative position between a relative position of the lens 1 and the imaging element 2 which is obtained through an optical axis displacement calculating process described below to the optical distortion correcting process (the affine table is offset as much as the displacement quantity)

FIG. 2 is a diagram schematically illustrating a relative positional relation at initial positions of the lens and the imaging element of the imaging device according to this embodiment.

As illustrated in FIG. 2, the imaging element 2 is disposed, at an initial position, on the other side of the lens 1 opposite to the imaging object to have vignetting areas 4a to 4d located outside an image circle 3 which is a range where an incident light coming in through the lens 1. Herein, the image circle 3 is a range of a circle with an optical axis 1a as the center where the light passing through the lens 1 forms an image, and is determined by a focal distance of the lens 1 and a viewing angle. In addition, the vignetting areas 4a to 4d are areas located outside the image circle 3 on the imaging element 2, where the light coming in through the lens 1 does not reach.

Further, this embodiment describes a case where the vignetting areas 4a to 4d with respect to the initial relative position between the lens 1 and the imaging element 2 (hereinafter, simply referred to as an initial position) are located at four corners of the rectangular imaging element 2. In other words, in this embodiment, the lens 1 and the imaging element 2 are configured such that the diameter of the image circle 3 formed by the lens 1 becomes smaller than the diagonal length of the rectangular imaging element 2. If the initial positions are set to almost match the centers of the image circle 3 and the imaging element 2, the vignetting areas 4a to 4d are formed on the four corners of the imaging element 2.

At the initial position, a position where the optical axis 1a of the lens 1 passes on the imaging element 2 is a reference position 2a on the imaging element 2. In other words, the reference position 2a of the imaging element 2 and the optical axis 1a of the lens 1 are matched at the initial position. Further, the center of the imaging element 2 and the reference position 2a are not necessarily matched.

The reference position 2a is calculated by an optical axis position calculating process performed in the image processing unit 101 (described below), and stored in the storage unit 102. The optical axis position calculating process is a process of calculating the position on the imaging element 2 of the optical axis 1a of the lens 1 on the basis of the shapes of the vignetting areas 4a to 4d.

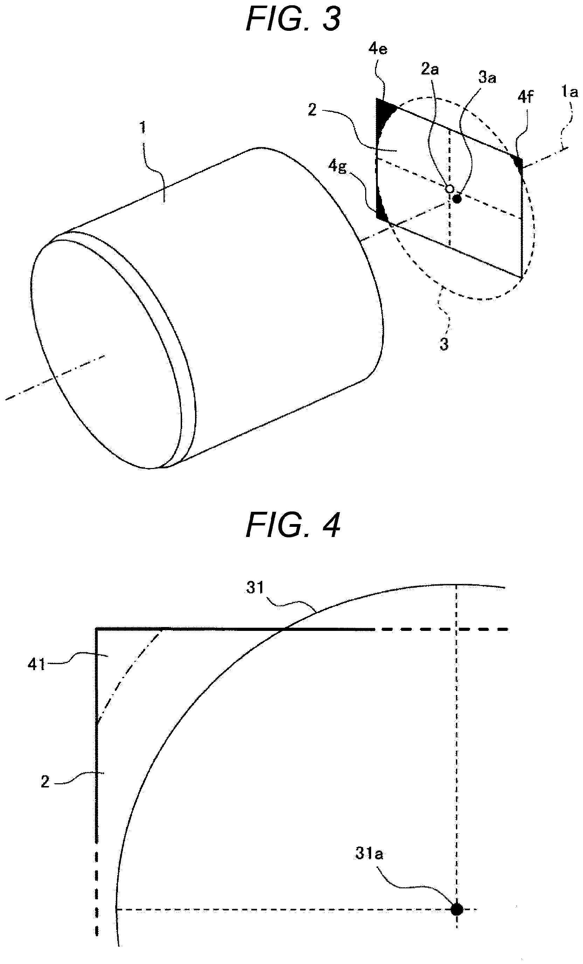

FIG. 3 is a diagram illustrating a case where the relative position of the lens and the imaging element of the imaging device is displaced.

As illustrated in FIG. 3, in a case where the lens 1 and the imaging element 2 are displaced at the relative position, the reference position 2a on the imaging element 2 and the position of the optical axis 1a of the lens 1 (that is, the center position of the image circle 3) are displaced (optical axis displacement). In this way, in a case where a displaced position which results from displacement in the relative position between the lens 1 and the imaging element 2 is caused (hereinafter, simply referred to displaced position), the shapes of vignetting areas 4e to 4g on the imaging element 2 (including the number of vignetting areas in some cases) are changed compared to the case of the initial position. In this embodiment, the optical axis position calculating process is performed at the displaced position to calculate the position of the optical axis 1a on the imaging element 2. The positional displacement quantity between the lens 1 and the imaging element 2 is calculated by comparing with the position of the optical axis 1a at the initial position (optical axis displacement calculating process).

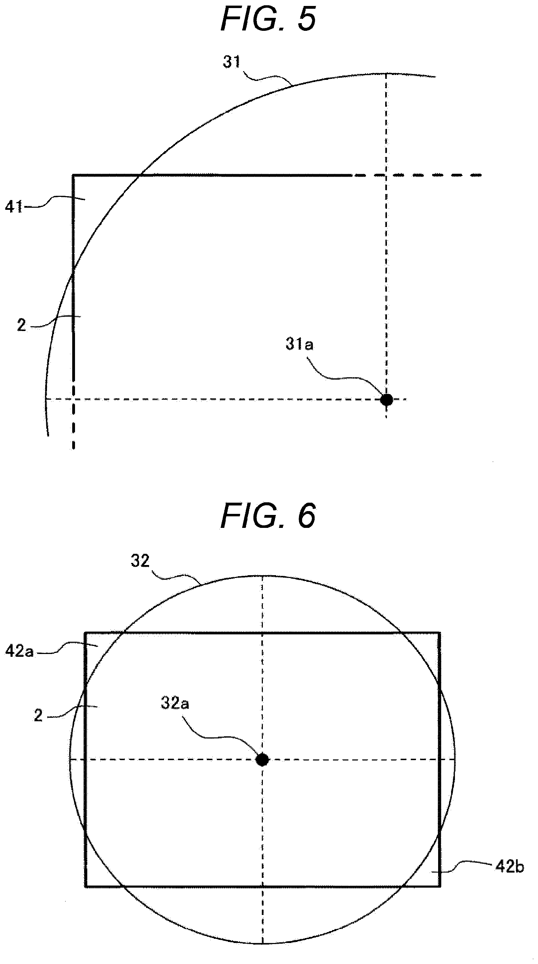

FIGS. 4 and 5 are diagrams for describing an example of the optical axis position calculating process in the image processing unit. FIG. 4 illustrates a state of a virtual circle used in the optical axis position calculating process. FIG. 5 illustrates a state of the optical axis position calculating process. Further, FIGS. 4 and 5 illustrate an example of a case where a vignetting area 41 is formed at one corner of the imaging element 2.

The optical axis position calculating process in the image processing unit 101 is a process of calculating the position on the imaging element 2 of the optical axis 1a of the lens 1 on the basis of the shapes of the vignetting areas 4a to 4g. In other words, in the optical axis position calculating process, assume a virtual circle 31 of the same diameter that of the image circle 3 of the lens 1 (FIG. 4). A portion matched between the virtual circle 31 and an arc shape of the outer periphery of the vignetting area 41 is detected (FIG. 5). The position of a center 31a of the virtual circle 31 in this state detected as a position on the imaging element 2 of the optical axis 1a of the lens 1 at the displaced position, and stored in the storage unit 102.

In addition, in the optical axis displacement calculating process of the image processing unit 101, the reference position 2a at the initial positions of the lens 1 and the imaging element 2 is read from the storage unit 102, and compared with the position (the center position of the image circle 3) of the optical axis 1a at the displaced position between the lens 1 and the imaging element 2. Then, the position displacement quantity between the lens 1 and the imaging element 2 at the displaced position with respect to the initial position is calculated.

The effects of this embodiment configured as described above will be described.

An in-vehicle camera device used in a driving support system necessarily copes with use under a high/low pitch environment or a high humidity environment. In addition, the positional displacement between aging deterioration of the lens and the imaging element is necessarily suppressed. However, it is impossible to completely clear the positional displacement between the lens and the imaging element caused by a temperature/humidity change or the aging.

In addition, there is a considerable optical distortion in the lens. For example, in a technique in which a displacement (parallax) in the horizontal direction related to an object reflected on two images captured by a pair of imaging devices (stereo camera) is specified, and a distance up to the object is calculated by the principal of triangulation on the basis of the specified parallax, if a deviation is generated in the optical distortion between the right and left lenses, the distance up to the object is not possible to be accurately calculated, and also the object captured by the imaging devices as a result may be not recognized as the same object. Therefore, the process of correcting the optical distortion of the lens is performed. However, in a case where the position between the lens and the imaging element is displaced due to the temperature/humidity change or the aging, the optical distortion is not possible to be accurately corrected. Thus, the accuracy of the process using these images is lowered.

With this regard, this embodiment includes the lens 1 facing the imaging object and the imaging element disposed on the other side of the lens 1 opposite to the imaging object so as to have vignetting areas 4a to 4d located outside the image circle 3 which is a range where the incident light coming in through the lens 1 forms an image. Therefore, the positional displacement quantity between the lens 1 and the imaging element 2 can be determined accurately. In other words, the position on the imaging element 2 of the optical axis of the lens 1 is calculated on the basis of the shapes of the vignetting areas 4a to 4g with respective to the initial relative position between the lens 1 and the imaging element 2 and the shapes thereof with respect to a displaced position which results from displacement in the relative position between the lens 1 and the imaging element 2, and by comparing these positions, the positional displacement quantity between the lens 1 and the imaging element 2 can be accurately determined. In addition, since the positional displacement quantity between the lens 1 and the imaging element 2 can be accurately determined, the correction of the optical distortion can be accurately performed. In addition, the optical axis displacement between the lens 1 and the imaging element 2 can be allowed when the imaging device 100 is manufactured, and an optical distortion quantity and a deviation quantity can be also allowed. Therefore, the manufacturing cost of the imaging device 100 can be suppressed.

Further, this embodiment has been described about an example where the optical axis position calculating process is performed on the vignetting area 41 formed at one corner of the imaging element 2, but the present invention is not limited thereto. Herein, another example of the optical axis position calculating process and still another example will be described with reference to FIGS. 6 and 7.

FIG. 6 is a diagram for describing another example of the optical axis position calculating process in the image processing unit.

In FIG. 6, the lens 1 and the imaging element 2 are located at least two of the four corners of the imaging element in which vignetting areas 42a and 42b with respect to the initial relative position between the lens 1 and the imaging element 2 are formed in a rectangular shape. In this case, in the optical axis position calculating process, the image processing unit 101 detects respective portions where a virtual circle 32 of the same diameter as the image circle 3 of the lens 1 and the arc shapes of the outer peripheries of at least two vignetting areas 42a and 42b are matched, and calculates an average position of the center positions of the virtual circles 32 corresponding to at least two vignetting areas 42a and 42b (herein, two center positions will be referred to as one center position 32a for the simplicity in the description) as a position on the imaging element 2 of the optical axis 1a of the lens 1.

FIG. 7 is a diagram for describing still another example of the optical axis position calculating process in the image processing unit.

In FIG. 7, the lens 1 and the imaging element 2 are located at least three of the four corners of the imaging element 2 in which vignetting areas 43a to 43d with respect to the initial relative position between the lens 1 and the imaging element 2 are formed in a rectangular shape. In this case, the image processing unit 101 detects an inscribed circle 33 to approximation straight lines 5a to 5c which are obtained by linearly approximating the arc shapes of the outer peripheries of three vignetting areas (for example, the vignetting areas 43a to 43c) among the vignetting areas 43a to 43d, and calculates a center position 33a of the inscribed circle 33 as a position on the imaging element 2 of the optical axis 1a of the lens 1.

Further, in a case where the optical axis position calculating process is performed using the vignetting areas 43a to 43d located at four corners of the imaging element 2, four inscribed circles 33 are obtained from a combination (4C3) of selecting three out of the approximation straight line 5a to 5d. Therefore, an average position of the center positions 33a of these inscribed circles 33 is obtained. Therefore, the position of the optical axis 1a can be calculated with more accuracy.

Further, the present invention is not limited to the above embodiments, but various modifications may be contained. For example, the above-described embodiments of the invention have been described in detail in a clearly understandable way, and are not necessarily limited to those having all the described configurations.

In addition, some or all of the configurations and functions may be realized by an integrated circuit. In addition, the configurations and the functions may be realized in software such that a processor interprets and performs a program which realizes each function.

### Reference Signs List

- 1: lens
- 1a: optical axis
- 2: imaging element
- 2a: reference position
- 3: image circle
- 4a to 4g: vignetting area
- 5a to 5d: approximation straight line
- 10: lattice chart
- 10a, 10b: image
- 11: imaging object
- 11a, 11b: image
- 31, 32: virtual circle
- 31a: center
- 32a, 33a: center position
- 33: inscribed circle
- 41, 42a, 42b, 43a to 43d: vignetting area
- 100: imaging device
- 101: image processing unit
- 102: storage unit

## Claims

1. An imaging device, comprising:
a lens (1) which faces an imaging object (11); and
an imaging element (2) which is disposed on another side of the lens (1) opposite to the imaging object to have a vignetting area (4a~4g) located outside an image circle which is a range where incident light coming in through the lens (1)forms an image,
**characterised by**:
an image processing unit (101) configured to perform a correction process on a captured image (11a) of the imaging object (11), to correct an optical distortion in the image (11a) from the lens (1),
wherein the image processing unit (101) is configured to calculate a displacement quantity between the lens (1) and the imaging element (2) with respect to initial positions of the lens (1) and the imaging element (2) by calculating a position (3a) on the imaging element (2) of an optical axis (1a) of the lens (1) on the basis of a shape of the vignetting area (4a~4g) with respect to an initial relative position between the lens (1) and the imaging element (2) and the shape of the vignetting area (4a~4g) with respect to a displaced position which results from displacement in the relative position between the lens (1) and the imaging element (2), and to apply the calculated displacement quantity to said correction process.

2. The imaging device according to claim 1,
wherein the lens (1) and the imaging element (2) are disposed such that the vignetting area (4a~4g) with respect to the initial relative position between the lens (1) and the imaging element (2) is located at four corners of the imaging element formed in a rectangular shape.

3. The imaging device according to claim 1,
wherein the image processing unit (101) detects a portion where a virtual circle (31) of the same diameter as an image circle (3) of the lens (1) and an arc shape of an outer periphery of the vignetting area (4a~4g) are matched so as to calculate a center position (31a) of the virtual circle (31) as a position (3a) on the imaging element (2) of the optical axis (1a) of the lens (1).

4. The imaging device according to claim 1,
wherein the lens (1) and the imaging element (2) are disposed such that the vignetting area (4a~4g) with respect to the initial relative position between the lens (1) and the imaging element (2) is located in at least two of four corners of the imaging element (2) formed in a rectangular shape, and
wherein the image processing unit (101) detects portions where a virtual circle (32) of the same diameter as an image circle (3) of the lens (1) and arc shapes of an outer periphery of the at least two vignetting areas (42a, 42b) are matched, and calculates an average position of center positions of the virtual circles (32) corresponding to the at least two vignetting areas (42a, 42b) as a position (3a) on the imaging element (2) of the optical axis (1a) of the lens (1).

5. The imaging device according to claim 1,
wherein the lens (1) and the imaging element (2) are disposed such that the vignetting area (4a~4g) with respect to the initial relative position between the lens (1) and the imaging element (2) is located in at least three of four corners of the imaging element (2) formed in a rectangular shape, and
wherein the image processing unit (101) detects an inscribed circle (33) to a straight line (5a~5d) obtained by linearly approximating an arc shape of an outer periphery of three vignetting areas (43a~43d) among the vignetting areas, and calculates a center position of the inscribed circle (33) as a position (3a) on the imaging element (2) of the optical axis (1a) of the lens (1).

6. An imaging method, comprising:
a procedure of disposing an imaging element (2) on another side of a lens (1) opposite to an imaging object (11), the lens (1) facing the imaging object (11), to have a vignetting area (4a~4g) located outside an image circle which is a range where an incident light coming in through the lens (1) forms an image; and
a correction process on a captured image (11a) of the imaging object (11), to correct an optical distortion in the image (11a) from the lens (1) by image processing, wherein: a displacement quantity between the lens (1) and the imaging element (2) with respect to initial positions of the lens (1) and the imaging element (2) is calculated by a procedure of calculating a position (3a) on the imaging element (2) of an optical axis (1a) of the lens (1) on the basis of a shape of the vignetting area (4a~4g) with respect to an initial relative position between the lens (1) and the imaging element (2) and the shape of the vignetting area (4a~4g) with respect to a displaced position which results from displacement in the relative position between the lens (1) and the imaging element (2), and the calculated displacement quantity is applied to said correction process.

## Patentansprüche

1. Bildgebungsvorrichtung umfassend:
eine Linse (1), die einem Bildgebungsobjekt (11) zugewandt ist; und
ein Bildgebungselement (2), das auf einer anderen Seite der Linse (1) gegenüber dem Bildgebungsobjekt angeordnet ist, so dass es außerhalb eines Bildkreises, der einen Bereich darstellt, in dem durch die Linse (1) eintretendes Licht ein Bild ausbildet, einen Vignettierungsbereich (4a-4g) aufweist,
**gekennzeichnet durch**:
eine Bildverarbeitungseinheit (101) zum Ausführen eines Korrekturprozesses an einem aufgenommenen Bild (11a) des Bildgebungsobjekts (11), um eine optische Verzerrung im Bild (11a) aus der Linse (1) zu korrigieren,
wobei die Bildverarbeitungseinheit (101) eingerichtet ist, eine Versatzgröße zwischen der Linse (1) und dem Bildgebungselement (2) bezüglich entsprechender Anfangspositionen der Linse (1) und des bildgebenden Elements (2) zu berechnen, indem eine Position (3a) einer optischen Achse (1a) der Linse (1) auf dem bildgebenden Element (2) aufgrund einer Form des Vignettierungsbereichs (4a-4g) bezüglich einer anfänglichen Relativposition zwischen der Linse (1) und dem bildgebenden Element (2) sowie der Form des Vignettierungsbereichs (4a-4g) bezüglich einer Versatzposition, die aus einem Versatz der relativen Position zwischen der Linse (1) und dem bildgebenden Element (2) resultiert, berechnet wird, und die berechnete Versatzgröße auf den Korrekturprozess anzuwenden.

2. Bildgebungsvorrichtung nach Anspruch 1,
wobei die Linse (1) und das bildgebende Element (2) so angeordnet sind, dass der Vignettierungsbereich (4a-4g) bezüglich der anfänglichen Relativposition zwischen der Linse (1) und dem Bildgebungselement (2) an vier Ecken des rechteckig ausgebildeten Bildgebungselements angeordnet ist.

3. Bildgebungsvorrichtung nach Anspruch 1,
wobei die Bildverarbeitungseinheit (101) einen Abschnitt erfasst, in dem ein gedachter Kreis (31) mit gleichem Durchmesser wie der Bildkreis (3) der Linse (1) und eine Bogenform eines Außenumfangs des Vignettierungsbereichs (4a~4g) zusammenfallen, um ein Zentrum (31a) des gedachten Kreises (31) als Position (3a) der optischen Achse (1a) der Linse (1) auf dem Bildgebungselement (2) zu berechnen.

4. Bildgebungsvorrichtung nach Anspruch 1,
wobei die Linse (1) und das Bildgebungselement (2) so angeordnet sind, dass der Vignettierungsbereich (4a-4g) bezüglich der anfänglichen Relativposition zwischen der Linse (1) und dem Bildgebungselement (2) an mindestens zwei von vier Ecken des rechteckig ausgebildeten Bildgebungselements (2) angeordnet ist, und
wobei die Bildverarbeitungseinheit (101) Abschnitte erfasst, an denen ein gedachter Kreis (32) mit gleichem Durchmesser wie ein Bildkreis (3) der Linse (1) und Bogenformen eines Außenumfangs der mindestens zwei Vignettierungsbereiche (42a, 42b) zusammenfallen, und eine gemittelte Position der Zentren der den mindestens zwei Vignettierungsbereichen (42a, 42b) entsprechenden virtuellen Kreise (32) als Position (3a) der optischen Achse (1a) der Linse (1) auf dem Bildgebungselement (2) berechnet.

5. Bildgebungsvorrichtung nach Anspruch 1,
wobei die Linse (1) und das Bildgebungselement (2) so angeordnet sind, dass der Vignettierungsbereich (4a-4g) bezüglich der anfänglichen Relativposition zwischen der Linse (1) und dem Bildgebungselement (2) an mindestens drei von vier Ecken des rechteckig ausgebildeten Bildgebungselements (2) angeordnet ist, und
wobei die Bildverarbeitungseinheit (101) einen Innenkreis (33) zu einer geraden Linie (5a-5d) erfasst, die durch lineare Approximation einer Bogenform eines Außenumfangs von dreien (43a-43d) der Vignettierungsbereiche gewonnen ist, und ein Zentrum des Innenkreises (33) als Position (3a) der optischen Achse (1a) der Linse (1) auf dem Bildgebungselement (2) berechnet.

6. Bildgebungsverfahren umfassend:
einen Vorgang zum Anordnen eines Bildgebungselements (2) auf einer anderen Seite einer Linse (1) gegenüber einem Bildgebungsobjekt (11), wobei die Linse (1) dem Bildgebungsobjekt (11) zugewandt ist, so dass es außerhalb eines Bildkreises, der einen Bereich darstellt, in dem durch die Linse (1) eintretendes Licht ein Bild ausbildet, einen Vignettierungsbereich (4a-4g) aufweist; und
einen Korrekturprozess an einem aufgenommenen Bild (11a) des Bildgebungsobjekts (11), um durch Bildverarbeitung eine optische Verzerrung im Bild (11a) aus der Linse (1) zu korrigieren, wobei:
eine Versatzgröße zwischen der Linse (1) und dem Bildgebungselement (2) bezüglich entsprechender Anfangspositionen der Linse (1) und des Bildgebungselements (2) mittels eines Vorgangs berechnet wird, der eine Position (3a) einer optischen Achse (1a) der Linse (1) auf dem Bildgebungselement (2) aufgrund einer Form des Vignettierungsbereichs (4a-4g) bezüglich einer anfänglichen Relativposition zwischen der Linse (1) und dem Bildgebungselement (2) sowie der Form des Vignettierungsbereichs (4a-4g) bezüglich einer Versatzposition, die aus einem Versatz der Relativposition zwischen der Linse (1) und dem Bildgebungselement (2) resultiert, berechnet, und wobei die berechnete Versatzgröße auf den Korrekturprozess angewandt wird.

## Revendications

1. Dispositif d'imagerie, comprenant :
un objectif (1) qui fait face à un objet d'imagerie (11) ; et
un élément d'imagerie (2) qui est disposé sur un autre côté de l'objectif (1) opposé à l'objet d'imagerie pour avoir une zone de vignettage (4a~4g) située à l'extérieur d'un cercle d'image qui est une plage où une lumière incidente pénétrant à travers l'objectif (1) forme une image,
**caractérisé par** :
une unité (101) de traitement d'image configurée pour exécuter un processus de correction sur une image capturée (11a) de l'objet d'imagerie (11), pour corriger une distorsion optique de l'image (11a) provenant de l'objectif (1),
dans lequel l'unité (101) de traitement d'image est configurée pour calculer une quantité de déplacement entre l'objectif (1) et l'élément d'imagerie (2) par rapport à des positions initiales de l'objectif (1) et de l'élément d'imagerie (2) en calculant une position (3a) sur l'élément d'imagerie (2) d'un axe optique (1a) de l'objectif (1) sur la base d'une forme de la zone de vignettage (4a-4g) par rapport à une position initiale relative entre l'objectif (1) et l'élément d'imagerie (2) et la forme de la zone de vignettage (4a~4g) par rapport à une position déplacée qui résulte d'un déplacement dans la position relative entre l'objectif (1) et l'élément d'imagerie (2), et pour appliquer la quantité de déplacement calculée audit processus de correction.

2. Dispositif d'imagerie selon la revendication 1,
dans lequel l'objectif (1) et l'élément d'imagerie (2) sont disposés de telle manière que la zone de vignettage (4a~4g) par rapport à la position initiale relative entre l'objectif (1) et l'élément d'imagerie (2) est située au niveau de quatre coins de l'élément d'imagerie formé à une forme rectangulaire.

3. Dispositif d'imagerie selon la revendication 1,
dans lequel l'unité (101) de traitement d'image détecte une partie où un cercle virtuel (31) du même diamètre qu'un cercle d'image (3) de l'objectif (1) et une forme d'arc d'une périphérie extérieure de la zone de vignettage (4a~4g) sont mis en correspondance de manière à calculer une position de centre (31a) du cercle virtuel (31) comme une position (3a) sur l'élément d'imagerie (2) de l'axe optique (1a) de l'objectif (1).

4. Dispositif d'imagerie selon la revendication 1,
dans lequel l'objectif (1) et l'élément d'imagerie (2) sont disposés de telle manière que la zone de vignettage (4a~4g) par rapport à la position initiale relative entre l'objectif (1) et l'élément d'imagerie (2) est située dans au moins deux de quatre coins de l'élément d'imagerie (2) formé à une forme rectangulaire, et
dans lequel l'unité (101) de traitement d'image détecte des parties où un cercle virtuel (32) du même diamètre qu'un cercle d'image (3) de l'objectif (1) et des formes d'arc d'une périphérie extérieure des au moins deux zones de vignettage (42a, 42b) sont mis en correspondance, et calcule une position moyenne de positions de centre des cercles virtuels (32) correspondant aux au moins deux zones de vignettage (42a, 42b) comme une position (3a) sur l'élément d'imagerie (2) de l'axe optique (1a) de l'objectif (1).

5. Dispositif d'imagerie selon la revendication 1,
dans lequel l'objectif (1) et l'élément d'imagerie (2) sont disposés de telle manière que la zone de vignettage (4a~4g) par rapport à la position initiale relative entre l'objectif (1) et l'élément d'imagerie (2) est située dans au moins trois de quatre coins de l'élément d'imagerie (2) formé à une forme rectangulaire, et
dans lequel l'unité (101) de traitement d'image détecte un cercle inscrit (33) sur une ligne droite (5a~5d) obtenu par approche linéaire d'une forme d'arc d'une périphérie extérieure de trois zones de vignettage (43a~43d) parmi les zones de vignettage, et calcule une position de centre du cercle inscrit (33) comme une position (3a) sur l'élément d'imagerie (2) de l'axe optique (1a) de l'objectif (1).

6. Procédé d'imagerie, comprenant :
une procédure de disposition d'un élément d'imagerie (2) sur un autre côté d'un objectif (1) opposé à un objet d'imagerie (11), l'objectif (1) faisant face à l'objet d'imagerie (11), pour avoir une zone de vignettage (4a~4g) située à l'extérieur d'un cercle d'image qui est une plage où une lumière incidente pénétrant à travers l'objectif (1) forme une image ; et
un processus de correction sur une image capturée (11a) de l'objet d'imagerie (11), pour corriger une distorsion optique de l'image (11a) provenant de l'objectif (1) par un traitement d'image, dans lequel :
une quantité de déplacement entre l'objectif (1) et l'élément d'imagerie (2) par rapport à des positions initiales de l'objectif (1) et de l'élément d'imagerie (2) est calculée par une procédure de calcul d'une position (3a) sur l'élément d'imagerie (2) d'un axe optique (1a) de l'objectif (1) sur la base d'une forme de la zone de vignettage (4a~4g) par rapport à une position initiale relative entre l'objectif (1) et l'élément d'imagerie (2) et la forme de la zone de vignettage (4a~4g) par rapport à une position déplacée qui résulte d'un déplacement dans la position relative entre l'objectif (1) et l'élément d'imagerie (2), et la quantité de déplacement calculée est appliquée audit processus de correction.
